# EUROPEAN PATENT SPECIFICATION

(11) **EP 0 767 386 B1**
(45) Date of publication and mention of the grant of the patent: **23.01.2002**
(21) Application number: 96202767.8
(22) Date of filing: 04.10.1996
(51) Int. Cl.: G01P 13/02, F24F 13/02

(54) **Ventilation system comprising a ventilating device with an air-flow direction sensor**
Eine Lüftungsvorrichtung enthaltendes Lüftungssystem mit Luftströmungsrichtungsmessaufnehmer
Système de ventilation comprenant un dispositif de ventilation avec un capteur de direction d'écoulement d'air

(30) Priority: 04.10.1995 NL 1001340
(43) Date of publication of application: 09.04.1997
(73) Proprietor: Zwaan, Adrianus Jacobus, NL-2252 BD Voorschoten (NL)
(72) Inventor: Zwaan, Adrianus Jacobus, NL-2252 BD Voorschoten (NL)
(74) Representative: Smulders, Theodorus A.H.J., Ir.

(56) References cited:
- DE-A- 2 627 222
- DE-A- 3 303 987
- FR-A- 2 248 512
- NL-A- 7 609 696

## Description

The invention relates to a ventilation system comprising at least two ventilating devices each provided with an air-passage valve.

Such a ventilation system is known from DE-A-3 303 987. This publication relates to a channel system comprising ventilating devices, wherein the capacity of the channel system can be varied by opening or closing the air passage valves of each ventilating device to a more or less greater extent. It is also described that the position of these valves can be operated by for example a motor.

Although nowadays mechanical ventilating devices, in particular air-conditioning systems, are used on a large scale for ventilating buildings, it is becoming increasingly recognized that natural ventilation of buildings is preferable, because then the so-called sick building syndrome caused by germs developing in the pipe system of such an air-conditioning system cannot occur. Besides, the user of a building experiences it as most pleasant if he can himself influence the control of the ventilation.

When ventilating buildings and more in particular office buildings in which rooms are located on both sides of the building, mostly adjacent to a central corridor, the use of natural ventilation causes a problem when ventilating the room situated on the leeward side of the building, that is to say the side that is not under wind pressure. At an average wind speed of 5 m/sec an excess pressure of 8-10 Pa prevails on the windward side on the outer wall of the building, while a like reduced pressure prevails on the leeward side of the outer wall. If conventional ventilating grates are used, the ventilating air passed into the room on the windward side is a multiple of the actually required amount of ventilating air, which can be set at 120 m³/hr for a double room, which ventilating air must be discharged via the corridor and the ventilating grates into the room on the leeward side. The above problem consists in an unnecessarily high loss of energy occurring in such a system in wintertime owing to the supply of an unduly large amount of ventilating air and in the "polluted" air which the room located on the leeward side always receives from the room on the windward side. Especially when there is smoking going on, e.g., in the room on the windward side, the user of the room on the leeward side, in particular if he is a nonsmoker, experiences this as most unpleasant, even if the air is highly thinned as a result of the ventilating air supplied in excessive quantities.

The use of a central exhaust system in, e.g., the corridor does not provide a solution to the above problem in the room on the leeward side, because this exhaust system would have to build up a reduced pressure not feasible in practice to ensure that also via the ventilating grate in the room on the leeward side air could flow into the building.

To prevent loss of energy as a result of excessive ventilation, there are preferably used self-regulating ventilating grates. Such a grate is, e.g., capable of maintaining at a pressure difference within a range of 1-25 Pa the air speed through the grate at a constant throughput, corresponding to the throughput at 1 Pa pressure difference and an air speed of 1 m/sec with a fully open grate, as described in Dutch Standard 1087:1991. Because throughout a year the air speed exceeds 2 m/sec for 95% of time, there is obtained with such a grate an optimum ventilation of a room located on the windward side of a building for 95% of time, without unnecessary loss of energy.

Such a self-regulating ventilating grate is known from NL-A-9500205, which is not a prior publication. With such a grate, however, the above-described problems involved in the ventilation of a room on the leeward side are not solved yet and have in fact only grown worse, because now the polluted air in the room on the windward side is not thinned any longer and this unthinned air is discharged via the ventilating grate into the room on the leeward side as a result of the reduced pressure prevailing on that side on the outer wall.

The object of the invention is to provide a solution to this problem too. The invention provides a ventilation system of the forementioned type characterized in that , at least one of which ventilating devices comprises a direction-sensitive air-flow speed sensor for generating a signal indicative of the air-flow speed and direction, and in that means are provided for closing on the basis of this signal the air passage valve of the ventilating device when the air flows in a first direction and opening to a greater or lesser degree, depending on the magnitude of the air-flow speed, the air passage valve of the ventilating device when the air flows in a second direction opposite to the first direction, in order to maintain the air flow at a predetermined throughput.

The invention is first based on the insight that the problems occurring in the ventilation, by means of automatically regulating ventilating grates, of the rooms located on the windward side and the leeward side of a building, can be overcome if the ventilating grate in the room on the leeward side is closed as soon as the air flow passes therethrough from the inside outwards. When the grate is closed on the leeward side, the central exhaust system need no longer compensate for the reduced pressure on the outer wall on the leeward side, so that the air from the room on the windward side is exhausted therethrough and cannot pollute the air in the room on the leeward side any longer. The closing of the ventilating grate in the room on the leeward side can of course be carried out manually as soon as it is established that the air flow passes through that grate from the inside outwards, but in practice this will less properly function, because the user of a room does not know whether his room is located on the windward side or on the leeward side, or because a room is not in use.

In the ventilation system according to a preferred embodiment of the invention, there is used a self-regulating ventilating device comprising a sensor capable of determining the air-flow speed and the air-flow direction.

In a ventilating grate comprising such a sensor the control can be so adjusted that the grate closes for a specific period when the sensor detects that the air flow passes through the grate from the inside outwards. After that period, the grate opens for a short period, e.g. for 1 minute, so that the sensor can determine whether the air flow still has the same direction. If this is the case, the grate closes again and the cycle repeats itself; if this is not the case, the grate changes to an automatic control of the air flow passed through at a predetermined throughput, e.g. a throughput belonging to an air speed of 1 m/sec with a fully open grate.

As far as the sensor is concerned, there may be used, e.g., the direction-sensitive air-flow speed sensor as described in NL-A-7609696. There may also be used a modified version of the air speed sensor as described in NL-A-9500205. This earlier described sensor comprises a first temperature-sensitive sensor element which is heated and a second temperature-sensitive sensor element which is not heated. The air flow to be detected is passed along these two temperature-sensitive sensor elements, and the heated element will be cooled by that air flow to a greater degree than the non-heated element. The difference in the variation of a physical property of both temperature-sensitive sensor elements under the influence of temperature change, e.g. a variation in the resistance value, is indicative of the speed of the air flow.

In the sensor according to the preferred embodiment of the invention, seen in the direction of the air flow along the sensor, there is provided, coaxially with the first, heated temperature-sensitive sensor element, at least a third temperature-sensitive sensor element. This third temperature-sensitive sensor element receives a portion of the heat developed by the first temperature-sensitive sensor element if the air flow is directed from the first temperature-sensitive sensor element to the third temperature-sensitive sensor element, or if the direction of the air flow is reversed, actually have the same temperature as the second temperature-sensitive sensor element. By means of bridge circuits and comparators as described in NL-A-9500205, or by feeding the signals produced by the different sensor elements to a microcomputer, both the speed of the air flow and its direction can be derived from the differences between these signals. Of course, it is also possible to provide a ventilating grate with a separate sensor for the air-flow speed und a separate sensor for the air-flow direction.

As described above, a lot of problems occurring in the ventilation of the rooms in a building can be prevented by means of a self-regulating ventilation system comprising ventilating grates which close when the air flow passes through the grate in the "wrong" direction.

According to a second embodiment of the invention, the ventilation in a room located on the leeward side can be further improved. To this end, self-regulating ventilating grates having a predetermined ventilating capacity are installed both in the room on the windward side of the building and in the room on the leeward side. The rooms are interconnected by a duct arranged in the corridor between the rooms. Via suitable means, a portion of the amount of ventilating air passed through the ventilating grate on the windward side is passed into the room on the windward side, and, via the connecting duct between the room on the windward side and similar means in the room on the leeward side, the rest of the ventilating air is passed into the room on the leeward side. The above means in both rooms may, e.g., be formed by openings with a closely calculated width, which are arranged in a lowered ceiling above which are arranged the ventilating grates and the connecting duct. Exhaustion of the ventilating air both from the room on the windward side and from the room on the leeward side can take place via a central exhaust system arranged in the corridor, which can properly function because it need no longer compensate for a reduced pressure.

By taking the above steps ,an ideal ventilation is obtained both in the rooms on the windward side and in the rooms on the leeward side of a building.

Dutch Standard 1087:1991 contains precise rules for the amount of ventilating air for an office room, depending on the size thereof. The necessary capacity of a ventilating grate for obtaining the required throughput can be determined by means of measurements. The standard obtainable self-regulating grates closely maintain the throughput, within a range of 1-25 Pa excess pressure over the grate, at the throughput calculated for the room according to Dutch Standard 1087 at 1 Pa pressure difference and 1 m/s air speed through the grate in the fully open position. Consequently, the grate on the windward side of such a self-regulating ventilating grate functioning according to this standard will never give more than the throughput calculated for the room in question. The amount of air flowing through the grate on the windward side is therefore not capable of providing both rooms, on the windward side and on the leeward side, with the amount of ventilation required according to Dutch Standard 1087.

However, ventilating air not only enters a room via the self-regulating grate but also, inadvertently, via slits in a building. In the system according to the invention the passage openings in the ceiling are exactly adjusted to pass the amount required per room, at 1 Pa and 1 m/s. Therefore, if 20 dm³/s is necessary for a room, then both the self-regulating grate and the passage openings in the permeable ceiling have this width (at 1 m/s air speed 200 cm² gives 20 dm³/s). Because of an "excess pressure" in the room on the windward side as a result of the ventilation through the slits, a portion of the air above the ceiling arriving via the grate cannot penetrate through the permeable ceiling and is passed via the connecting pipe above the corridor between the two rooms to the room on the leeward side.

As a result of the central exhaustion and the constant supply through the grate on the windward side, the grate on the leeward side will for a rather long time continue passing air into the room on the leeward side, in spite of the reduced pressure on the leeward side. The surplus of ventilating air on the windward side, i.e. the constant throughput via the grate plus the variable throughput via the slits, will be discharged via the connecting pipe above the permeable ceiling into the room on the leeward side until the surplus has reached such an extent that the amount of air supplied on the windward side through grate and slits exceeds the total amount of air required for the two rooms. This surplus is not exhausted by the central exhaust system, because this system has a capacity equal to the need of the rooms on the windward and leeward side, and is therefore discharged on the leeward side via the grate to the outside. At that moment the grate closes on the leeward side. The entry of the air through the grate on the windward side and the slits on the windward side is then limited by the resulting excess pressure in the building. Thus, the connecting pipe between the two rooms has a compensating effect. When the system is in balance, the room on the windward side is ventilated by the air inadvertently entering via slits on the windward side, e.g. 20 dm³/s, and the room on the leeward side is ventilated by the self-regulating grate on the windward side via the compensating pipe above the corridor, e.g. 20 dm³/s. The advantage of the system is that the compensating effect is independent of the extent to which ventilation through slits occurs. Of course, losses on the leeward side as a result of slits cannot be prevented, but requirements are imposed on the building shells. It is observed that the windward side can become the leeward side, and conversely, depending on the wind direction.

In cases of sound insulation being important, e.g. known per se sound-insulating ventilating grates, so-called silencers, are used.

When the throughput required cannot be produced by a grate, two silencers may be arranged in a so-called master-slave configuration, with the control electronic devices in the silencer functioning as master controlling the silencer functioning as slave, the latter only comprising a servomotor.

The invention will hereinafter be explained in more detail by means of an example of embodiment with reference to the drawings. In these drawings:
Fig. 1a is a front view of a self-regulating ventilating device forming part of a ventilation system according to the invention;
Fig. 1b is a cross-section along the line Ib-Ib in Fig. 1a;
Fig. 2 is a diagrammatic top view of a sensor suitable for measuring both the air-flow speed and the air-flow direction;
Fig. 3a is a side view in cross-section of a building in which a ventilating grate according to the invention can be used; and
Fig. 3b is a magnification of the part of the building encircled in Fig. 3a.

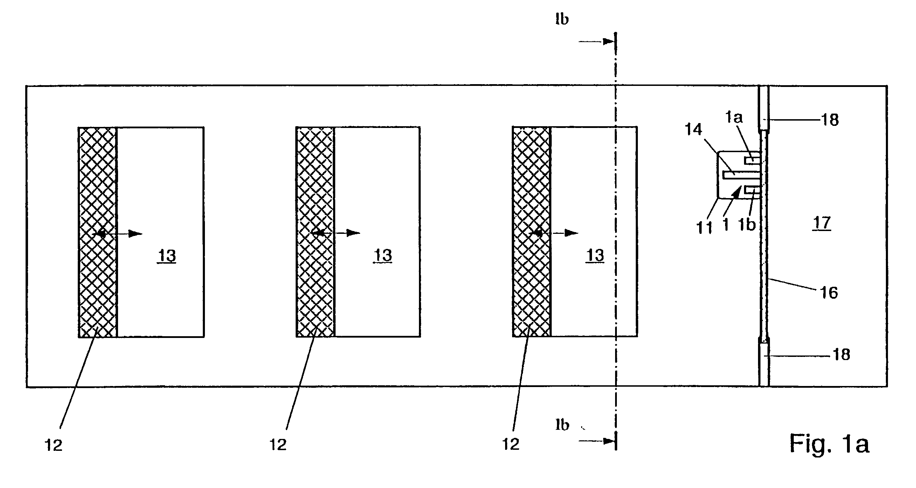

Fig. 1a very diagrammatically shows how a sensor 1 for measuring the air-flow speed and air-flow direction can be placed in a rectangular measuring duct 11 arranged in a ventilating device. For the purpose of illustration, there is shown a part of a ventilating device of the sliding type with air outlet openings 12 and a slidable air passage valve 13. The ventilating device shown is a so-called silencer in which provisions are made for minimizing sound transmission from the inlet opening 15 to the outlet openings 12. However, the invention can also be used in conventional ventilating grates.

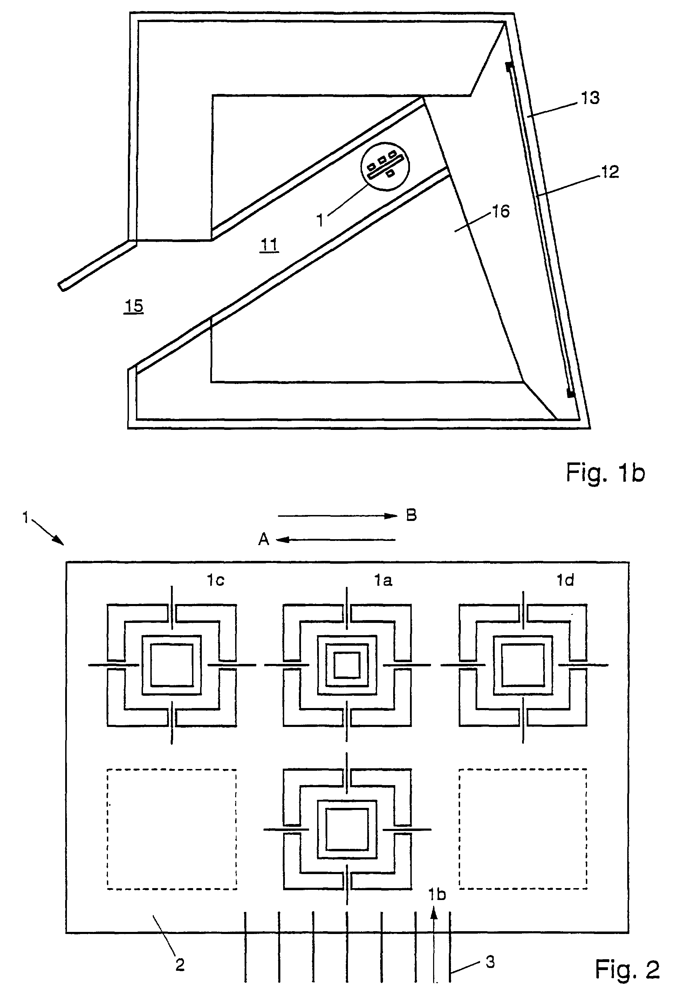

As appears from Fig. 1b, the measuring duct 11 with the sensor contained therein is arranged in the ventilating device in a manner such that it extends from the inlet opening 15 to the room behind the air passage valve or slide. Thus, all the air passing the measuring duct must also pass this valve or slide, because the space into which the measuring duct opens is in open communication with the space behind the valve or slide. Thus, turbulence around the sensor, which may lead to measuring errors, is avoided, and the signal produced by the sensor is a direct or indirect measure for the air speed through the grate and is independent of the dimensions of the grate and of the width of the inlet opening thereof.

The actual construction and operation of the ventilating device 10 has no further relevance to a proper understanding of the invention and is, for the rest, well-known, so that this will not be discussed any further.

According to a variant, the measuring duct may also fully extend from the inlet opening 15 to the front face of the ventilating device, so that it opens into the face which also contains the discharge openings 13. In such an arrangement of the measuring duct, the output signal of the sensor 1 is no direct measure for the air speed through the grate, and in the manner described in NL-A-9500205, tables must be used.

As third variant, the sensor 1 may be placed in one of the openings 13.

The sensor 1 is mounted on a printed circuit board 16 shown in Fig. 1a, inserted into rails 18 in the ventilating device, so that it can readily be removed for maintenance work. The other side of the printed circuit board carries the other components diagrammatically shown in Fig. 1, with the exception of the servomotor (not shown) mounted on the slidable grate. These components are placed in a compartment 17 of the ventilating device, shielded from external influences.

Fig. 2 shows a possible construction of a combined sensor for measuring the air-flow speed and the air-flow direction through a ventilating device, e.g. a ventilating device of the type shown in Fig. 1. The sensor is arranged on a carrier of a ceramic or epoxy material and is provided with connecting pins 3. The sensor comprises a first sensor element 1a, which is artificially heated, e.g. by applying around this element a layer of a resistive material through which a current is passed large enough to heat the resistive material. The sensor further comprises a second, a third and a fourth temperature-sensitive sensor element, 1b, 1c and 1d, respectively, which in principle may be identical. The sensor element 1b functions as described in NL-A-9500205, along with the sensor element 1a, to detect the air speed. For details of this detection of the air speed by means of the sensor elements 1a and 1b, reference is made to the above patent application.

The sensor elements 1c and 1d are intended, along with the sensor element 1a, to enable detection of the direction of the air flow. When the air flow moves in the direction of the arrow A in Fig. 2, the sensor element 1c will receive a portion of the heat generated in the sensor element 1a, while the still unheated air flows along the sensor element 1d. When the air flow moves in the direction of the arrow B, the sensor element 1d will similarly be heated and the sensor element 1c will not. The sensor elements may all be, e.g., temperature-sensitive resistive elements. By incorporating the sensor elements 1c and 1d into the bridge circuit, or by coupling these sensor elements, along with the sensor elements 1a and 1b, with a microprocessor, it can be determined, in a manner known per se to those skilled in the art, from the variation of the physical property of the sensor elements caused by a temperature change whether the sensor element 1c is warmer or colder than the sensor element 1d, from which the direction of flow can be determined. In principle, it is possible to omit one of the sensor elements 1c or 1d and to determine the direction of flow from the variation of the physical property of one sensor element under the influence of the temperature.

If desired, the sensitivity of the sensor 1 can be increased by applying over the sensor elements 1a, 1c and 1d (if present) a tubular duct which passes the air heated by the element 1a to the element 1c or 1d, depending on the direction of the air flow. The cross-section of this tubular duct may be constant but also vary and, e.g., may be larger at the sensor element 1a than at the sensor element 1c or 1d.

In the above-described embodiments, the sensor element 1a is heated and is placed in a manner such that it is located in the air flow which also passes through the ventilating device and the sensor element 1b is likewise placed in the air flow, but is thermally insulated from the sensor element 1a by means of a heat-resistant partition 14, so that the heat thereof has no influence on the physical properties of the sensor element 1b.

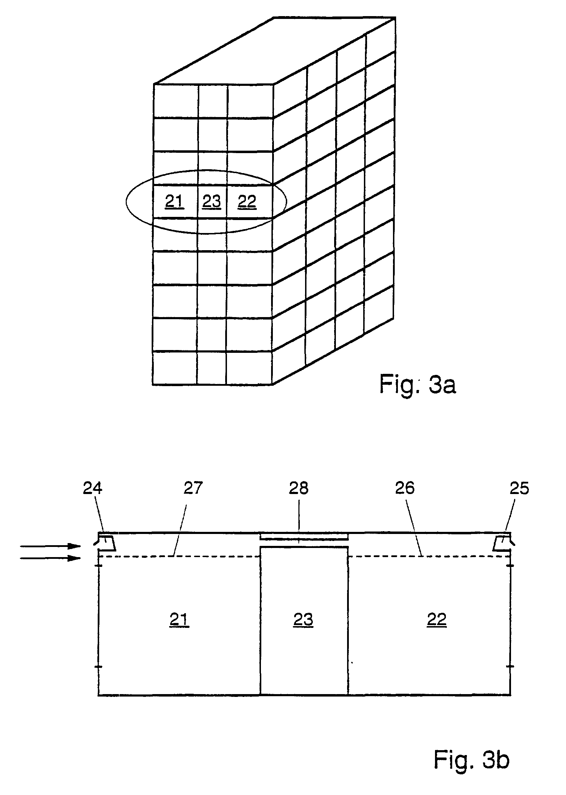

Fig. 3a very diagrammatically shows in cross-section a side view of a building, e.g. an office building, the rooms of which may be provided with a ventilation system according to the invention.

Fig. 3b shows, by way of example, more in detail but still diagrammatically, the rooms 21 and 22 located on the respective sides of the building from Fig. 3a, with a corridor located therebetween. The room 21 is located on the windward side, and the room 22 is located on the leeward side. According to the invention, each of the outer walls has a self-regulating ventilating device 24 and 25, respectively, of the type shown in Fig. 1a, b. As explained above, in the situation shown, the grate of the ventilating device 24 is (partly) open and the grate of the ventilating device 25 is either closed or also partly open, depending on the actual air-flow direction. An exhaust device, not shown, arranged in the corridor 23, exhausts the polluted air from the room 21, while in the room 22 the air cannot be polluted by the air from the room 21.

According to the above second embodiment, there are provided means for passing a portion of the air admitted through the grate of the ventilating device 24 directly into the room 22, in order to realize optimum ventilation here as well. To this end, each of the rooms 21 and 22 is provided with means for passing into the room a portion of the total amount of air admitted via the device 24. These means may, e.g., consist of a lowered ceiling 27 with openings of such dimensions that the entire ceiling provides a closely predetermined effective air passage. The remaining amount of air can be passed via a duct arranged in the corridor 23 into the room 22, which also has a lowered ceiling with air passage openings having a closely predetermined total effective air passage. The ventilating air is exhausted from the rooms 21 and 22 via a known central exhaust system, not shown, arranged in the corridor 23.

When the wind has a direction opposite to the direction shown in the Figure, the grate of the ventilating device 24 is of course closed and the grate of the ventilating device 25 is self-regulating.

It will be clear that, instead of lowered ceilings with air passage openings, other duct-shaped means may also be used to pass only a portion of the air admitted through the ventilating device 24 or 25 into the room in which the device is arranged.

## Claims

1. A ventilation system comprising at least two ventilating devices (10) each provided with an air passage valve (13), **characterized in that**, at least one or said ventilating devices comprises a direction-sensitive air-flow speed sensor (1) for generating a signal indicative of the airflow speed and direction; and **in that** means are provided for closing, on the basis of this signal, the air passage valve (13) of the ventilating device (10) when the air flows in a first direction and opening to a greater or lesser degree, depending on the magnitude of the air-flow speed, the air passage valve (13) of the ventilating device (10) when the air flows in a second direction opposite to the first direction, in order to maintain the air flow at a predetermined throughput.

2. A ventilation system according to claim 1, wherein each of the ventilating devices comprises a direction-sensitive air-flow speed sensor (1).

3. A ventilation system according to claim 2, wherein means are provided for periodically opening the closed air passage valve and closing it again if the air flow has retained the first direction and automatically maintaining the air flow at a predetermined throughout when the direction of the air flow is opposite to the first direction.

4. A ventilation system according to claim 1, 2 or 3, wherein the first ventilating device (24) of the system is arranged in a space (20) located on a first side of a building and the second ventilating device (25) is arranged in a space (22) located on a second, opposite side of the building; a duct system being provided which interconnects both spaces (21, 22) with which both ventilating devices (24,25) communicate, said duct system (27) comprising means for passing a first predetermined amount of air into the first space (21) and a second predetermined amount of air into the second space (22).

5. A ventilation system according to claim 4, wherein the duct system is arranged above a lowered ceiling (27) arranged in both spaces and the means for passing a determined amount of air into one of both spaces consist of passage openings in the lowered ceiling.

## Patentansprüche

1. Lüftungssystem mit wenigstens zwei Lüftungsvorrichtungen (10), die jeweils mit einem Luftdurchlaßventil (13) versehen sind, **dadurch gekennzeichnet, daß** wenigstens eine der Lüftungsvorrichtungen einen richtungsempfindlichen Luftströmungsgeschwindigkeitssensor (1) aufweist, der ein die Geschwindigkeit und die Richtung der Luftströmung angebendes Signal erzeugt; und daß Einrichtungen vorgesehen sind, die auf der Basis dieses Signals das Luftdurchlaßventil (13) der Lüftungsvorrichtung (10) schließen, wenn die Luft in einer ersten Richtung strömt, und in Abhängigkeit von der Höhe der Luftströmungsgeschwindigkeit das Luftdurchlaßventil (13) der Lüftungsvorrichtung (10) mehr oder weniger weit öffnen, wenn die Luft in einerzweiten, zur ersten Richtung entgegengesetzten Richtung strömt, um so einen vorbestimmten Durchsatz der Luftströmung beizubehalten.

2. Lüftungssystem nach Anspruch 1, bei dem jede der Lüftungsvorrichtungen einen richtungsempfindlichen Luftströmungsgeschwindigkeitssensor (1) aufweist.

3. Lüftungssystem nach Anspruch 2, bei dem Einrichtungen vorgesehen sind, um das geschlossene Luftdurchlaßventil periodisch zu öffnen und zu schließen, wenn die Luftströmung in der ersten Richtung verblieben ist, und um die Luftströmung automatisch auf einem vorbestimmten Durchsatz zu halten, wenn die Richtung der Luftströmung der ersten Richtung entgegengesetzt ist.

4. Lüftungssystem nach Anspruch 1, 2 oder 3, bei dem die erste Lüftungsvorrichtung (24) des Systems in einem Raum (20) angeordnet ist, der auf einer ersten Seite eines Gebäudes angeordnet ist, und bei dem die zweite Lüftungsvorrichtung (25) in einem Raum (22) auf einer zweiten, gegenüberliegenden Seite des Gebäudes angeordnet ist; wobei ein Leitungssystem vorgesehen ist, das beide Räume (21, 22) verbindet, mit denen beide Lüftungsvorrichtungen (24, 25) in Verbindung stehen, wobei das Leitungssystem (27) eine Einrichtung zum Durchlassen einer ersten vorbestimmten Menge Luft in den ersten Raum (21) und einer zweiten vorbestimmten Menge Luft in den zweiten Raum (22) aufweist.

5. Lüftungssystem nach Anspruch 4, bei dem das Leitungssystem über einer abgehängten Decke (27) vorgesehen ist, die in beiden Räumen angeordnet ist, und die Einrichtung zum Durchlassen einer bestimmten Menge Luft in einen der beiden Räume aus Durchlaßöffnungen in der abgehängten Decke besteht.

## Revendications

1. Système de ventilation comportant au moins deux dispositifs de ventilation (10) pourvus chacun d'une soupape de passage d'air (13), **caractérisé en ce qu'**au moins un desdits dispositifs de ventilation comporte un capteur de vitesse d'écoulement d'air sensible à la direction (1) afin de générer un signal indicatif de la vitesse d'écoulement d'air et de la direction; et **en ce que** des moyens sont prévus pour fermer, sur la base de ce signal, la soupape de passage d'air (13) du dispositif de ventilation (10) lorsque l'air s'écoule dans une première direction et ouvrir à un plus ou moins grand degré, en fonction de l'amplitude de la vitesse d'écoulement d'air, la soupape de passage d'air (13) du dispositif de ventilation (10) lorsque l'air s'écoule dans une deuxième direction opposée à la première direction, afin de maintenir l'écoulement d'air à un débit prédéterminé.

2. Système de ventilation selon la revendication 1, dans lequel chacun des dispositifs de ventilation comporte un capteur de vitesse d'écoulement d'air sensible à la direction (1).

3. Système de ventilation selon la revendication 2, dans lequel des moyens sont prévus afin d'ouvrir de manière périodique la soupape de passage d'air fermée et la fermer de nouveau si l'écoulement d'air a conservé la première direction et maintenir automatiquement l'écoulement d'air à un débit prédéterminé lorsque la direction de l'écoulement d'air est opposée à la première direction.

4. Système de ventilation selon la revendication 1, 2 ou 3, dans lequel le premier dispositif de ventilation (24) du système est disposé dans un espace (20) situé sur un premier côté d'un immeuble et le deuxième dispositif de ventilation (25) est disposé dans un espace (22) situé sur un deuxième côté opposé de l'immeuble; un système de conduit étant prévu, lequel relie les deux espaces (21, 22) avec lesquels les deux dispositifs de ventilation (24, 25) communiquent, ledit système de conduit (27) comportant les moyens destinés à laisser passer une première quantité prédéterminée d'air dans le premier espace (21) et une deuxième quantité prédéterminée d'air dans le deuxième espace (22).

5. Système de ventilation selon la revendication 4, dans lequel le système de conduit est disposé au-dessus d'un faux-plafond (27) disposé dans les deux espaces et les moyens pour le passage d'une quantité déterminée d'air dans l'un des deux espaces se composent d'ouvertures de passage dans le faux-plafond.
